(19) Europäisches Patentamt
European Patent Office
Office européen des brevets

(11) **EP 4 447 187 A1**

(12) **EUROPEAN PATENT APPLICATION**

(43) Date of publication:
**16.10.2024 Bulletin 2024/42**

(21) Application number: **24167933.1**

(22) Date of filing: **29.03.2024**

(51) International Patent Classification (IPC):
*H01M 10/0587* (2010.01)   *H01M 50/533* (2021.01)
*H01M 50/538* (2021.01)

(52) Cooperative Patent Classification (CPC):
**H01M 10/0587; H01M 4/13; H01M 50/533;
H01M 50/538;** Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.04.2023   CN 202310369144**

(71) Applicant: **Ningde Amperex Technology Limited
Ningde City, Fujian Province 352100 (CN)**

(72) Inventors:
• **CUI, Min**
  **Ningde City, Fujian Province 352100 (CN)**
• **WANG, Yougui**
  **Ningde City, Fujian Province 352100 (CN)**
• **ZHANG, Qingwen**
  **Ningde City, Fujian Province 352100 (CN)**

(74) Representative: **Icosa
83 avenue Denfert-Rochereau
75014 Paris (FR)**

(54)   **BATTERY CELL AND BATTERY**

(57)     A battery cell includes an electrode assembly. The electrode assembly includes an electrode plate. The electrode plate includes an electrode plate body and a plurality of tabs connected to the electrode plate body. Each of the tabs includes an opening. The opening divides the tab into a plurality of sub-tabs. A width of the opening is w, and w satisfies: $0 \text{ mm} < w \leq 0.1 \text{ mm}$. After each tab is divided into a plurality of sub-tabs, each sub-tab is smaller in size. During conveyance of the electrode plate, a diameter of an idler through which the electrode plate passes is 60 mm to 300 mm. With each tab divided into a plurality of sub-tabs of smaller sizes, the folding rate of the tab can be effectively reduced when the diameter of the idler falls within the above range.

FIG. 1

## Description

### TECHNICAL FIELD

This application relates to the technical field of electrochemistry, and in particular, to a battery cell and a battery.

### BACKGROUND

An electrode plate of a lithium-ion battery includes a plurality of tabs. A residual internal stress exists in the plurality of tabs molded by cutting. During conveyance and winding of the electrode plate, a wrap angle of the tab in contact with an idler, a winding needle, or the electrode plate body is unduly large, so that the tab is prone to problems such as folding and warping, thereby incurring a risk of short-circuiting of a battery cell.

### SUMMARY

Some embodiments of this application provide an electrode plate, a battery cell, and an electronic device to solve the problem of inferior winding of tabs in a battery.

According to a first aspect, this application provides a battery cell. The battery cell includes an electrode assembly. The electrode assembly includes an electrode plate. The electrode plate includes an electrode plate body and a plurality of tabs connected to the electrode plate body. Each of the tabs includes an opening. The opening divides the tab into a plurality of sub-tabs. A width of the opening is w, and w satisfies: $0 \text{ mm} < w \leq 0.1 \text{ mm}$.

In some embodiments, a width of the sub-tab is $A_1$ mm, and a width of the tab is $A_2$ mm, satisfying a conditional expression (1):

$$A_1 = K_1 \times A_2 + B_1 \qquad (1)$$

In the formula above, $K_1$ satisfies: $0.32 \leq K_1 \leq 0.41$; and $B_1$ satisfies: $0.6 \leq B_1 \leq 2.14$.

In some exemplary embodiments, $A_1$ satisfies: $5 \leq A_1 \leq 30$; and $A_2$ satisfies: $15 \leq A_2 \leq 70$.

In some exemplary embodiments, the battery cell is a cylindrical cell. A width of the sub-tab is $A_1$ mm, a diameter of the cylindrical cell is $r_1$ mm, and $A_1$ and $r_1$ satisfy a conditional expression (2):

$$A_1 = K_2 \times r_1 + B_2 \qquad (2)$$

In the formula above, $K_2$ satisfies: $0.22 \leq K_2 \leq 0.45$; and $B_2$ satisfies: $-2.75 \leq B_2 \leq -0.73$.

In some exemplary embodiments, $r_1$ satisfies: $10 \leq r_1 \leq 32$; and $A_1$ satisfies: $1.4 \leq A_1 \leq 12$.

In some exemplary embodiments, a width of the tab increases gradually along a winding direction of the electrode plate body.

In some exemplary embodiments, the electrode plate is a positive electrode plate and/or a negative electrode plate.

In some exemplary embodiments, the tab includes a first edge facing away from the electrode plate body. The opening extends from the first edge toward a side on which the electrode plate body is located. In an extension direction of the opening, a spacing between an end, oriented toward the electrode plate body, of the opening and the electrode plate body is $L_1$, and Li satisfies: $0.1 \text{ mm} < Li \leq 2 \text{ mm}$.

In some exemplary embodiments, in a winding direction of the electrode plate body, the first width of the opening of a first tab near a winding center of the electrode plate body is greater than the second width of the opening of a second tab, wherein the first tab is closer to a winding center of the electrode plate body as compared to the second tab. In an extension direction of the opening, a difference of the width of the opening is less than 0.05 mm.

According to a second aspect, this application provides a battery. The battery includes a shell and the battery cell disclosed above. The shell is configured to accommodate the battery cell.

The battery cell and battery according to some embodiments of this application achieve at least the following beneficial effects:

During conveyance of the electrode plate, the diameter of an idler is 60 mm to 300 mm. With each tab divided into a plurality of sub-tabs of smaller sizes, the wrap angle of each sub-tab in contact with the idler can be reduced, and the folding rate of the tab can be effectively reduced. During the winding, the stress borne by each sub-tab is relatively small, so that the wrap angle of each sub-tab in contact with the electrode plate body can be reduced, thereby reducing the probability of folding and warping of the tab, and improving the yield rate of jelly rolls made of electrode plates.

**BRIEF DESCRIPTION OF DRAWINGS**

To describe the technical solutions in some embodiments of this application or the prior art more clearly, the following outlines the drawings to be used in the description of some embodiments of this application or the prior art. Evidently, the drawings outlined below are merely a part of embodiments of this application. A person skilled in the art may derive other drawings from such drawings without making any creative effort.

FIG. 1 is a schematic diagram of a three-dimensional structure of a cylindrical cell according to an embodiment of this application;
FIG. 2 is a schematic structural diagram of an unwound electrode plate according to an embodiment of this application;
FIG. 3 is a schematic diagram of an electrode plate body fitted with a plurality of tabs on one side according to an embodiment of this application;
FIG. 4 is a schematic side view of a prismatic cell according to an embodiment of this application;
FIG. 5 is a linear fitting diagram of a tab width and a sub-tab width according to an embodiment of this application; and
FIG. 6 is a linear fitting diagram of a battery cell diameter and a sub-tab width according to an embodiment of this application.

List of reference numerals:
10. electrode assembly; 100. electrode plate; 110. electrode plate body; 120. tab; 121. sub-tab; 1211. first edge; 122. opening; 200. active material layer; X. length direction; Y. width direction.

**DETAILED DESCRIPTION OF EMBODIMENTS**

To make the objectives, technical solutions, and advantages of this application clearer, the following describes this application in further detail with reference to drawings and embodiments. Understandably, the specific embodiments described herein are merely intended to explain this application, but are not intended to limit this application.

The applicant hereof finds that, when an electrode plate of an electrode assembly is conveyed through an idler, a wrap angle of the tab in contact with the idler is unduly large. Consequently, the tab is prone to problems such as folding and warping caused by overstress. The applicant also finds that, in a winding process of the cylindrical cell, when an inner diameter of the electrode plate body reaches a specified value, the wrap angle of the tab in contact with the winding needle or the electrode plate body directly determines the force exerted on the tab. A large wrap angle usually results in a large force on the tab and folding of the tab. Therefore, by dividing the tab into a plurality of sub-tabs, the wrap angle of the tab in contact with the winding needle and the electrode plate body can be reduced, and the problems such as folding and warping of the tab can be alleviated. The applicant also finds that the problems of tab folding and warping can be alleviated effectively by correlating the width of the cut-out tab with the dimensions of the battery cell and designing the widths of the sub-tabs. In view of this, an embodiment of this application provides a battery cell and a battery.

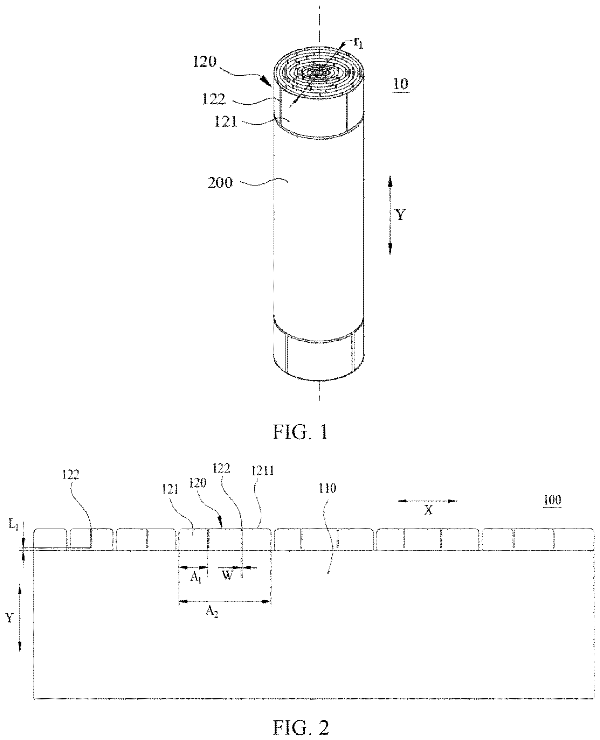

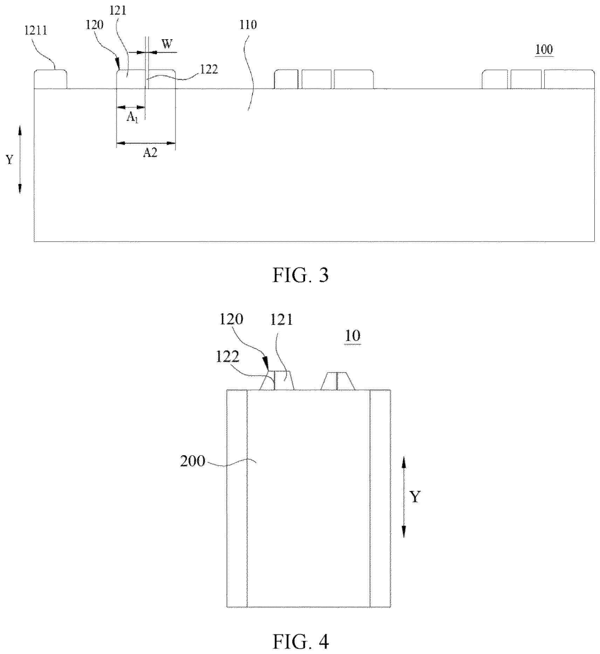

The battery cell according to an embodiment of this application includes an electrode assembly 10. As shown in FIG. 1, which is a schematic structural diagram of the electrode assembly 10 according to an embodiment of this application, the electrode assembly 10 includes an electrode plate 100. As shown in FIG. 2 and FIG. 3, which are schematic structural diagrams of an unwound electrode plate 100, the electrode plate 100 includes an electrode plate body 110 and at least one tab 120 connected to the electrode plate body 110. The electrode plate 100 further includes an active material layer 200. The active material layer 200 is disposed on a surface of the electrode plate body 110. The electrode plate body 110 is exhibited in a length direction X and a width direction Y. In the width direction Y of the electrode plate body 110, each tab 120 is connected to one end of the electrode plate body 110. In the length direction X of the electrode plate body 110, the electrode plate body is wound around a winding center that is one end of the electrode plate body 110. Each tab 120 is bent synchronously with the electrode plate body 110 during the winding of the electrode plate body 110. After completion of the winding, each tab 120 is bent toward the winding center of the electrode plate body 110 to knead the tab flat, so that the tabs 120 on the same side of the electrode plate body 110 are kneaded so flat that the tabs are located in the same plane.

Each tab 120 includes at least one opening 122. The opening 122 divides the tab 120 into a plurality of sub-tabs 121. Each sub-tab 121 is connected to the electrode plate body 110. The width of the opening 122 is w, and w satisfies: 0 mm < w ≤ 0.1 mm. The width of the opening 122 is a dimension of the electrode plate body 110 in the length direction X. The opening 122 is formed by cutting. Specifically, the tab 120 is divided into a plurality of sub-tabs 121 without changing the area of the tab. When w is greater than 0.1 mm, a part of the tab needs to be cut away, thereby making the process hardly practicable and leading to an insufficient flow area of the tab.

In this embodiment of this application, during conveyance of the electrode plate 100, the diameter of an idler is 60 mm to 300 mm. With each tab 120 divided into a plurality of sub-tabs 121 of smaller sizes, the wrap angle of each sub-tab 121 in contact with the electrode plate body 110 can be reduced, and the folding rate of the tab 120 can be effectively reduced. During the winding, the stress borne by each sub-tab 121 is relatively small, so that the wrap angle of each sub-tab 121 in contact with the electrode plate body can be reduced, thereby reducing the probability of folding and warping of the tab 120, and improving the yield rate of jelly rolls made of electrode plates 100. After the tab is kneaded flat, there is a clearance between two adjacent sub-tabs 121, thereby facilitating an electrolyte solution in infiltrating into the interior of the electrode assembly 10 when the electrode assembly 10 is applied to a battery, and in turn, improving the infiltration efficiency.

In the width direction Y of the electrode plate body 110, the number of tabs 120 located on the same side of the electrode plate body 110 may be plural. When the number of tabs 120 is plural, each tab 120 may include a plurality of openings 122, so that it is convenient to divide a tab 120 large in width into a plurality of sub-tabs 121 that are small in width, thereby reducing the stress borne by each sub-tab 121 during the winding.

The battery cell according to this embodiment of this application includes a cylindrical cell and a prismatic cell. After the electrode plate body 110 is wound, in the width direction Y of the electrode plate body 110, a cross-section of the electrode plate body 110 of a cylindrical cell is approximately circular. A cross-section of the electrode plate body 110 of a prismatic cell is approximately racetrack-shaped or approximately quadrilateral. As shown in FIG. 4, which is a schematic side view of a prismatic cell according to an embodiment of this application, the tab 120 is located on one side of the electrode plate body 110 in the width direction Y of the electrode plate body 110 after the electrode plate 100 is wound.

In this embodiment of this application, the width of the sub-tab 121 can fit the width of the tab 120. For example, in the width direction Y of the electrode plate body 110, when the number of tabs 120 located on the same side of the electrode plate body 110 is plural, the width of the sub-tab 121 is set to fit the width of the tab 120 to effectively alleviate the problem of folding during the winding and conveyance of the electrode plate and improve the infiltration efficiency for the battery. Specifically, in the winding direction of the electrode plate body 110 (or, after the electrode plate 100 is spread out, in the length direction X of the electrode plate body 110), the width of the sub-tab 121 is $A_1$ mm, and the width of the tab 120 is $A_2$ mm, satisfying the conditional expression (1):

$$A_1 = K_1 \times A_2 + B_1 \qquad (1)$$

In the formula above, $K_1$ satisfies: $0.32 \leq K_1 \leq 0.41$; and $B_1$ satisfies: $0.6 \leq B_1 \leq 2.14$.

In a process of conveying the electrode plate 100 through an idler or winding the electrode plate, the larger the tab 120 in size, the larger the wrap angle of the tab 120 in contact with the idler or the electrode plate body 110, and therefore, the more prone the tab 120 is to folding and warping. By designing the width of the sub-tab 121 with reference to the width of the tab 120, the width of the sub-tab 121 is made appropriate. The wrap angle of the tab 120 in contact with the electrode plate body 110 can be reduced during conveyance of the electrode plate 100, thereby reducing the probability of folding the tab 120. For example, when the battery cell of this application is a prismatic cell or a cylindrical cell, by setting the width of the tab 120 and the width of the sub-tab 121 to satisfy the above conditional expression (1), the probability of folding the tab 120 can be reduced effectively.

When $A_1$ and $A_2$ satisfy the conditional expression (1), $A_1$ satisfies: $5 \leq A_1 \leq 30$. For example, $A_1$ may be 5, 10, 15, 18, 22, 25, 30 , or the like. When the number of tabs 120 located on the same side of the electrode plate body 110 is plural, the width of each of the sub-tabs 121 of the divided tab 120 is set to be in the range of 5 mm to 30 mm. In this way, the tab 120 large in width is divided to prevent folding and warping caused by the stress of the tab 120 large in width. In addition, this makes it convenient to control a ratio between the width of each sub-tab 121 and the width of the tab 120 to fall within an appropriate range, and reduces the probability of folding when the tab 120 passes through an idler during winding.

When $A_1$ and $A_2$ satisfy the conditional expression (1), $A_2$ satisfies: $15 \leq A_2 \leq 70$. For example, $A_2$ may be 15 , 18 , 25 , 30 , 45 , 55 , 70 , or the like. In the above width range, it is convenient to control the width of the tab 120 to fall within an appropriate range, so that the stress of the tab 120 is relatively small, thereby reducing the probability of folding and warping the tab 120.

When the battery cell is a cylindrical cell, the width of the sub-tab 121 is $A_1$, the diameter of the cylindrical cell is $r_1$, and $A_1$ and $r_1$ satisfy a conditional expression (2):

$$A_1 = K_2 \times r_1 + B_2 \qquad (2)$$

In the formula above, $K_2$ satisfies: $0.22 \leq K_2 \leq 0.45$; and $B_2$ satisfies: $-2.75 \leq B_2 \leq -0.73$.

Specifically, in a direction perpendicular to the width direction Y of the electrode plate body 110, a maximum distance from an outer surface of the electrode plate body 110 located on the outermost layer to the winding center of the electrode plate body 110 is the diameter $r_1$ of the cylindrical cell.

By designing the width of the sub-tab 121 with reference to the diameter of the battery cell, the width of the cut-out sub-tab 121 is caused to match the diameter of the battery cell. In this way, the stress borne by each sub-tab 121 is relatively small during the winding, so that the wrap angle of the tab 120 in contact with the electrode plate body 110 is relatively small, thereby reducing the probability of folding and warping of the tab 121, and improving the yield rate of jelly rolls made of electrode plates 100. In addition, the ratio between the width of the sub-tab 121 and the width of the opening 122 is made appropriate, thereby facilitating the entry of the electrolyte solution into the center region of the battery cell, and effectively improving the infiltration effect of the electrolyte solution and alleviating the folding of the tab 120.

When $A_1$ mm and $r_1$ mm satisfy the conditional expression (2), $A_1$ satisfies: $1.4 \leq A_1 \leq 12$ . For example, $A_1$ may be $1.4$ , $2.5$ , $3.0$ , $4.2$ , $6.5$ , $8.5$ , $12$ , or the like. When the width falls within the above range, the width of each sub-tab 121 is made appropriate, thereby effectively reducing the occurrences of folding of the sub-tab 121, making the structural strength appropriate at a junction between each sub-tab 121 and the electrode plate body 110, and preventing irreversible damage to the junction between the sub-tab 121 and the electrode plate body 110 during kneading.

When $A_1$ and $r_1$ satisfy the conditional expression (2), $r_1$ satisfies: $10 \leq r_1 \leq 32$ . For example, $r_1$ may be $10$ , $14$ , $16$ , $18$ , $21$ , $26$ , $30$ , $32$ , or the like. The diameter $r_1$ of the battery cell according to this embodiment of this application falls within the above range, and $A_1$ is designed to satisfy $1.4 \leq A_1 \leq 12$ . In this way, $r_1$ matches $A_1$, and the probability of folding the tab 120 during winding of the electrode plate of the cylindrical cell is reduced effectively. Further, this facilitates the matching with the width of the sub-tab 121 and the width of the opening 122, and improves the infiltration efficiency of the electrolyte solution.

Each tab 120 includes a first edge 1211 facing away from the electrode plate body 110. The opening 122 extends from the first edge 1211 toward a side on which the electrode plate body 110 is located. In this way, none of the sub-tabs 121 is prone to the interference from an adjacent sub-tab 121, and each sub-tab 121 can bend more independently and stably during the winding. When the tab 120 includes a plurality of openings 122, the extension directions of the openings 122 may be the same or different. Optionally, the extension directions of the openings 122 are the same, so as to reduce the interference between two adjacent sub-tabs 121 during the winding and kneading. For example, the extension directions of the openings 122 are the width direction Y of the electrode plate body 110.

In the extension direction of the opening 122, the spacing between an end, oriented toward the electrode plate body 110, of the opening 122 and the electrode plate body 110 is Li. $L_1$ satisfies: $0.1$ mm $< Li \leq 2$ mm. In this way, each sub-tab 121 is at a specified distance from the electrode plate body 110, so as to prevent the bent tab 120 from damaging the active material layer 200 on the electrode plate body 110 during the kneading. In addition, this also prevents the processing equipment from damaging the electrode plate body 110 and impairing the performance of the electrode assembly 10 when creating an opening 122 on the tab 120. When Li is greater than 2 mm, the tab 120 is divided insufficiently, and the probability of folding and warping the tab can hardly be reduced.

In the extension direction of the opening 122, the difference of the width of the opening 122 is less than 0.05 mm. In other words, a maximum width of an opening 122 is $W_{max}$ and a minimum width of the same opening is $W_{min}$, satisfying: $W_{max} - W_{min} < 0.05$ mm. In this way, the interference between two adjacent sub-tabs 121 can be reduced conveniently during winding and kneading. At the same time, the integrity of each tab 120 can be maintained maximally, and the internal resistance of the battery is reduced. For example, in an extension direction of the opening 122 extending toward the electrode plate body 110, the width of the opening 122 decreases gradually. Therefore, the width of the opening 122 at an end oriented toward the electrode plate body 110 is $W_{min}$, and the width of the opening 122 at an end away from the electrode plate body 110 is $W_{max}$. Alternatively, in the extension direction of the opening 122 extending toward the electrode plate body 110, the width of the opening 122 remains unchanged.

In the winding direction of the electrode plate body 110, the widths of different openings 122 may be equal or not. Optionally, the widths of all the openings 122 are equal. Alternatively, in the winding direction of the electrode plate body 110, the width of the opening 122 near the winding center of the electrode plate body 110 is greater than the width of the opening 122 away from the winding center of the electrode plate body 110. In this way, in the battery cell (especially a cylindrical cell) according to an embodiment of this application, when the winding curvature of the tab 120 in a center region of the electrode assembly 10 is relatively high, the probability of generating debris from two adjacent sub-tabs 121 that touch and abrade each other is reduced during the winding.

The diameter of a wound electrode plate body 110 increases gradually from the first layer to the outermost layer of the jelly roll, and the winding curvature decreases gradually. With a higher winding curvature, the wrap angle of the tab 120 in contact with the electrode plate body 110 may be larger, and the tab 120 is at higher risk of folding and warping. In an embodiment of this application, in the winding direction of the electrode plate body 110, the width of each tab 120 is set to increase gradually, so as to reduce the risk of folding and warping of the tab 120 brought about by the change in diameter.

In the width direction Y of the electrode plate body 110, when the number of tabs 120 located on the same side of the electrode plate body 110 is plural, the width of each tab 120 may be set to increase gradually in the winding direction of the electrode plate body 110. Optionally, in the winding direction of the electrode plate body 110, the widths of a plurality of tabs 120 located on the same side of the electrode plate body 110 increase gradually, and the widths of a plurality of sub-tabs 121 of each tab 120 increase gradually or remain unchanged.

The electrode plate 100 is a positive electrode plate and/or a negative electrode plate. For example, the electrode assembly 10 includes two electrode plates 100. One of the electrode plate 100 is a positive electrode plate, and the other of the electrode plate 100 is a negative electrode plate. The electrode assembly 10 further includes a separator. The positive electrode plate, the separator, and the negative electrode plate are stacked sequentially and then wound. In the width direction Y of the electrode plate body 110, the tab 120 of the positive electrode plate is located at one end of the electrode plate body 110, and the tab 120 of the negative electrode plate is located at the other end of the electrode plate body 110. The tab 120 of the positive electrode plate is bent and kneaded flat toward the winding center of the electrode plate body 110 to form a positive tab 120, and the tab 120 of the negative electrode plate is bent and kneaded flat toward the winding center of the electrode plate body 110 to form a negative tab 120.

An embodiment of this application further provides a battery. The battery includes a shell and the electrode assembly 10 disclosed above. The shell is configured to accommodate the electrode assembly 10. The battery further includes a current collection plate. One of the surfaces of the current collection plate is electrically connected to the tab 120, and the other surface is connected to the shell. For example, the battery includes two current collection plates. The two current collection plates are disposed opposite to each other in the width direction Y of the electrode plate body 110. The two current collection plates are connected to the tabs 120 of the two electrode plates 100 respectively one-to-one, and then the two current collection plates are electrically connected to the housing respectively to provide a contact point for charging and discharging the battery.

The following describes the structure of the battery cell of this application exemplarily by using a cylindrical cell and a prismatic cell as examples. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

Embodiments 1-1 to 1-7 and Comparative Embodiment 1-1 and 1-2 use prismatic cells are examples. In Embodiments 1-1 to 1-7, the widths of the tabs and sub-tabs are designed based on the conditional expression (1) $A_1 = K_1 \times A_2 + B_1$. In Comparative Embodiment 1-1, no opening is created on the tabs. In Comparative Embodiment 1-2, the widths of the tabs and the widths of the sub-tabs do not satisfy the conditional expression (1). Table 1 shows the relevant parameters of different embodiments and comparative embodiments.

**Table 1**

| Item | Width of tab (mm) | Minimum width of sub-tab (mm) | Maximum width of sub-tab (mm) | Folding rate of tab (%) |
|---|---|---|---|---|
| Embodiment 1-1 | 15 | 5 | 8 | 0.030 |
| Embodiment 1-2 | 20 | 6.5 | 10 | 0.035 |
| Embodiment 1-3 | 30 | 10 | 14.5 | 0.050 |
| Embodiment 1-4 | 40 | 13 | 18 | 0.063 |
| Embodiment 1-5 | 50 | 17 | 23 | 0.078 |
| Embodiment 1-6 | 60 | 20 | 27 | 0.085 |
| Embodiment 1-7 | 70 | 24 | 30 | 0.092 |
| Comparative Embodiment 1-1 | 70 | / | / | 0.145 |
| Comparative Embodiment 1-2 | 70 | 30 | 35 | 0.123 |

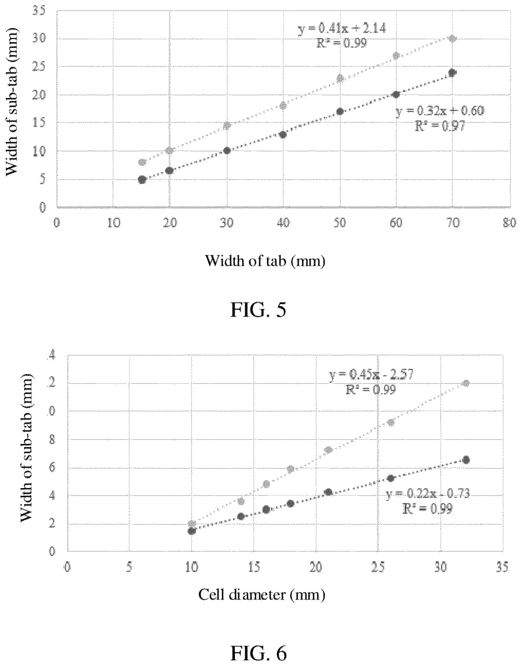

FIG. 5 is a linear fitting diagram of the width $A_2$ of the tab and the width $A_1$ of the sub-tab of the prismatic cells in Embodiments 1-1 to 1-7. As can be seen from Table 1, the linear fitting degree is relatively high when the width $A_2$ of the tab and the width $A_1$ of the sub-tab of the battery cells in different embodiments are designed based on the conditional expression (1) $A_1 = K_1 \times A_2 + B_1$. As can be seen from the experimental results in Table 1, the folding rate of the tabs can be reduced to 0.1% or lower, and the processing yield rate is high. When the widths of the tabs and sub-tabs satisfy the conditional expression (1) $A_1 = K_1 \times A_2 + B_1$, the folding rate of the tabs is relatively low, and the number of sub-tabs can be controlled based on the width of the sub-tab, so as to prevent the flow area of the tab from being reduced by a cold solder joint between a sub-tab and a conductive piece caused by an excessive number of sub-tabs.

As can be seen from Embodiment 1-7 and Comparative Embodiment 1-1, when no opening is created on the tab of the cylindrical cell, the folding rate of the tab is relatively high. As can be seen from Embodiment 1-7 and Comparative Embodiments 1-1 and 1-2, when an opening is created on the tab of the cylindrical cell but the width $A_2$ of the tab of the cell and the width $A_1$ of the sub-tab do not satisfy the conditional expression (1), the folding rate of the tabs is relatively high.

Embodiments 2-1 to 2-7 and Comparative Embodiment 2-1 and 2-2 use cylindrical cells are examples. In Embodiments 2-1 to 2-7, the diameter $r_1$ of the battery cell and the width $A_1$ of the sub-tab are designed based on the conditional expression (2) $A_1 = K_2 \times r_1 + B_2$. In Comparative Embodiment 2-1, no opening is created on the tab of the cylindrical cell. In Comparative Embodiment 2-2, the diameter of the battery cell and the width of the sub-tab do not satisfy the conditional expression (2). Table 2 shows the relevant parameters of different embodiments and comparative embodiments.

**Table 2**

| Item | Cell diameter (mm) | Minimum width of sub-tab (mm) | Maximum width of sub-tab (mm) | Folding rate of tab (%) |
|---|---|---|---|---|
| Embodiment 2-1 | 10 | 1.4 | 2 | 0.018 |
| Embodiment 2-2 | 14 | 2.5 | 3.5 | 0.020 |
| Embodiment 2-3 | 16 | 3 | 4.8 | 0.025 |
| Embodiment 2-4 | 18 | 3.4 | 5.9 | 0.031 |
| Embodiment 2-5 | 21 | 4.2 | 7.2 | 0.038 |
| Embodiment 2-6 | 26 | 5.2 | 9.2 | 0.045 |
| Embodiment 2-7 | 32 | 6.5 | 12 | 0.048 |
| Comparative Embodiment 2-1 | 32 | / | / | 0.105 |
| Comparative Embodiment 2-1 | 32 | 13 | 16 | 0.082 |

FIG. 6 is a linear fitting diagram of the diameter $r_1$ of the battery cell and the width $A_1$ of the sub-tab of the cylindrical cells in Embodiments 2-1 to 2-7. As can be seen from Table 2, the linear fitting degree is relatively high when the diameter $r_1$ of the battery cell and the width $A_1$ of the sub-tab in different embodiments are designed based on the conditional expression (2) $A_1 = K_2 \times r_1 + B_2$. As can be seen from the experimental results in Table 2, the folding rate of the tabs can be reduced to 0.048% or lower, and the processing yield rate is high.

As can be seen from Embodiment 2-7 and Comparative Embodiment 2-1, when no opening is created on the tab of the cylindrical cell, the folding rate of the tab is relatively high. As can be seen from Embodiment 2-7 and Comparative Embodiments 2-1 and 2-2, when an opening is created on the tab of the cylindrical cell but the diameter $r_1$ of the battery cell and the width $A_1$ of the sub-tab do not satisfy the conditional expression (2), the effect of optimizing the folding of the tabs is relatively low.

In the description of this application, a list of items referred to by the terms such as "at least one of", "at least one thereof" and other similar terms may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C.

In the accompanying drawings of this application, the same or similar reference numerals represent the same or similar components. In the description of this application, understandably, a direction or positional relationship indicated by the terms such as "up", "down", "left", and "right" is a direction or positional relationship based on the illustration in the drawings, and is merely intended for ease or simplicity of describing this application, but not intended to indicate or imply that the indicated device or component is necessarily located in the specified position or constructed or operated in the specified direction or position. Therefore, the terms depicting the positional relationship in the drawings are merely for illustrative purposes, but not to be understood as any limitation on this patent. A person of ordinary skill in the art may understand the specific meanings of such terms depending on specific situations.

The foregoing descriptions are merely exemplary embodiments of this application, but are not intended to limit this application. Any modifications, equivalent substitutions, and improvements made without departing from the spirit and principles of this application still fall within the protection scope of this application.

**Claims**

1. A battery cell, comprising an electrode assembly (10), wherein the electrode assembly (10) comprises an electrode plate (100), the electrode plate (100) comprises an electrode plate body (110) and a plurality of tabs (120) connected to the electrode plate body (110); **characterized in that**, each of the tabs (120) comprises an opening (122), the opening (122) divides the tab (120) into a plurality of sub-tabs (121), a width of the opening (122) is w, and 0 mm < w ≤ 0.1 mm.

2. The battery cell according to claim 1, **characterized in that** a width of each sub-tab (121) is $A_1$ mm, and a width of the each tab (120) is $A_2$ mm, and

$$A_1 = K_1 \times A_2 + B_1 \quad ;$$

wherein, $0.32 \leq K_1 \leq 0.41$; and $0.6 \leq B_1 \leq 2.14$.

3. The battery cell according to claim 2, **characterized in that**, $5 \leq A_1 \leq 30$; and $15 \leq A_2 \leq 70$.

4. The battery cell according to claim 1, **characterized in that** the battery cell is a cylindrical cell, a width of each sub-tab (121) is $A_1$ mm, a diameter of the cylindrical cell is $r_1$ mm, and

$$A_1 = K_2 \times r_1 + B_2 \quad ;$$

wherein, $0.22 \leq K_2 \leq 0.45$; and $-2.75 \leq B_2 \leq -0.73$.

5. The battery cell according to claim 4, **characterized in that**, $10 \leq r_1 \leq 32$; and $1.4 \leq A_1 \leq 12$.

6. The battery cell according to any one of claims 1-5, **characterized in that** a width of each tab (120) increases gradually along a winding direction of the electrode plate body (110).

7. The battery cell according to any one of claims 1-5, **characterized in that** the electrode plate (100) is a positive electrode plate or a negative electrode plate.

8. The battery cell according to any one of claims 1-7, **characterized in that**, the each tab (120) comprises a first edge (1211) facing away from the electrode plate body (110), and the opening (122) extends from the first edge (1211) toward a side on which the electrode plate body (110) is located; and
in an extension direction of the opening (122), a distance between an end of the opening (122) oriented toward the electrode plate body (110)and the electrode plate body (110) is $L_1$, and 0.1 mm < Li ≤ 2 mm.

9. The battery cell according to any one of claims 1-8, **characterized in that**
in a winding direction of the electrode plate body, a first width of the opening (122) of a first tab (120) is greater than a second width of the opening (122) of a second tab (120), wherein the first tab (120) is closer to a winding center of the electrode plate body (110) as compared to the second tab (120).

10. The battery cell according to any one of claims 1-9, **characterized in that**
in an extension direction of the opening (122), a difference between the width of the opening (122) is less than 0.05 mm.

11. A battery, **characterized in that** the battery comprises:

the battery cell according to any one of claims 1 to 10; and
a shell, configured to accommodate the battery cell.

FIG. 1

FIG. 2

FIG. 3

FIG. 4

FIG. 5

FIG. 6

Europäisches
Patentamt

European
Patent Office

Office européen
des brevets

## EUROPEAN SEARCH REPORT

Application Number

EP 24 16 7933

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 218 005 176 U (JIANGSU ZHENGLI XINNENG BATTERY TECH CO LTD) 9 December 2022 (2022-12-09) * paragraph [0002]; figure 1 * ----- | 1-11 | INV. H01M10/0587 H01M50/533 H01M50/538 |
| X | CN 218 827 235 U (JIANGSU ZHENGLI XINNENG BATTERY TECH CO LTD) 7 April 2023 (2023-04-07) * claim 1; figures 1-3 * ----- | 1-11 | |
| A | CN 216 719 986 U (XINWANDA ELECTRIC VEHICLE BATTERY LTD COMPANY) 10 June 2022 (2022-06-10) * figures 19a,20 * ----- | 1-11 | |
| | | | TECHNICAL FIELDS SEARCHED (IPC) H01M |

The present search report has been drawn up for all claims

| Place of search | Date of completion of the search | Examiner |
|---|---|---|
| The Hague | 2 August 2024 | Fiorani, Giuseppe |

EPO FORM 1503 03.82 (P04C01)

## ANNEX TO THE EUROPEAN SEARCH REPORT
## ON EUROPEAN PATENT APPLICATION NO.

EP 24 16 7933

This annex lists the patent family members relating to the patent documents cited in  the above-mentioned European search report.
The members are as contained in the European Patent Office EDP file on
The European Patent Office is in no way liable for these particulars which are merely given for the purpose of information.

02-08-2024

| Patent document cited in search report | | Publication date | Patent family member(s) | | Publication date |
|---|---|---|---|---|---|
| CN 218005176 | U | 09-12-2022 | CN | 218005176 U | 09-12-2022 |
| | | | DE | 102023115239 A1 | 21-12-2023 |
| | | | US | 2023411803 A1 | 21-12-2023 |
| CN 218827235 | U | 07-04-2023 | CA | 3235107 A1 | 27-04-2023 |
| | | | CN | 116014066 A | 25-04-2023 |
| | | | CN | 218827235 U | 07-04-2023 |
| | | | EP | 4376137 A1 | 29-05-2024 |
| | | | KR | 20230058301 A | 03-05-2023 |
| | | | US | 2024258553 A1 | 01-08-2024 |
| | | | WO | 2023068885 A1 | 27-04-2023 |
| CN 216719986 | U | 10-06-2022 | CN | 115732623 A | 03-03-2023 |
| | | | CN | 115732625 A | 03-03-2023 |
| | | | CN | 115732736 A | 03-03-2023 |
| | | | CN | 115732851 A | 03-03-2023 |
| | | | CN | 216719986 U | 10-06-2022 |
| | | | CN | 216720016 U | 10-06-2022 |
| | | | CN | 216720208 U | 10-06-2022 |
| | | | CN | 217444488 U | 16-09-2022 |

EPO FORM P0459

For more details about this annex : see Official Journal of the European Patent Office, No. 12/82